# EUROPEAN PATENT APPLICATION

(11) **EP 2 437 429 A1**
(43) Date of publication of application: **04.04.2012**
(21) Application number: 10306073.7
(22) Date of filing: 01.10.2010
(51) Int. Cl.: H04L 12/24, H04L 29/12

(54) **Network policy controller**

(71) Applicant: Mancala Networks, 38240 Meylan (FR)
(72) Inventor: Dekok, Alan, 38000, Grenoble (FR)
(74) Representative: de Beaumont, Michel

(57) **Abstract**

The invention concerns a network policy controller coupled to a computer network and comprising: a communications interface (303) arranged to monitor network communications to track events relating to a plurality of network devices connected to said network; at least one memory (306) arranged to store past events relating to each of said plurality of network devices; and a processor (302) arranged to verify, in response to an event relating to one of said network devices, the occurrence of at least one past event stored in said memory for said network device, and to perform an action based on said verification.

## Description

### FIELD OF THE INVENTION

The present invention relates generally to the field of computer networks, and in particular to a network policy controller and a method of controlling communications on a computer network.

### BACKGROUND TO THE INVENTION

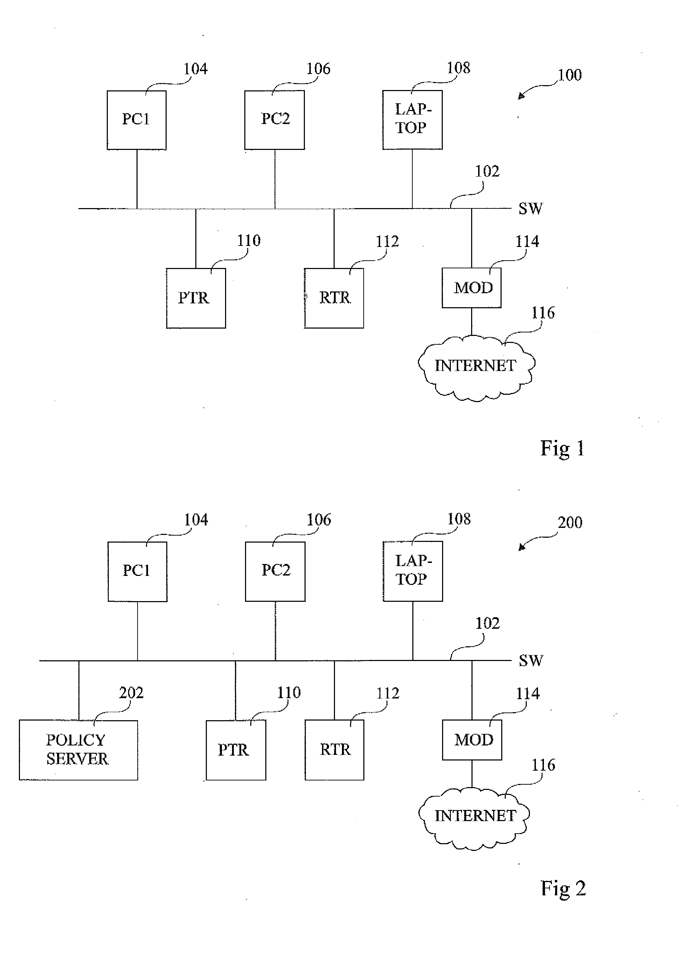

Figure 1 illustrates an example of a computer network 100 comprising a switch 102 interconnecting various devices, in particular PCs (personal computers) 104 and 106, a laptop computer 108, a printer 110, a router 112, and a modem 114 for providing access to the internet 116. Modem 114 is for example an ADSL (Asymmetric digital subscriber line) modem or other type.

Different network protocols are used for implementing various functions on the network. These include:
- assigning network IP (internet protocol) addresses, for example according to DHCP (Dynamic Host Configuration Protocol);
- performing authentication, for example according to RADIUS (Remote Authentication Dial-In User Service);
- informing network devices of the hardware addresses of other devices, such as MAC (Media Access Control) addresses, for example according to ARP (Address resolution protocol);

- detecting new hardware connected to the switch 102, for example according to SNMP (Simple Network Management Protocol); and
- mapping domain names to IP addresses, for example according to DNS (Domain name system).

Each of these functions is generally implemented by a number of different network devices, such as the PCs 104, 106, the modem 114, the switch 102, and/or other dedicated devices on the network not shown in Figure 1.

In networks such as network 100 of Figure 1, there is a technical problem in ensuring adequate control of the network status changes, in particular when new devices join the network, or leave the network. For example, a new device connected to the network may be assigned an IP address allowing it to access the internet even though it has not been authenticated, or some of the protocols may continue to provide services to a device even after its DHCP lease of its IP address has expired. As a further example, a device may be allocated an IP address, but leave the network shortly afterwards without the DCHP server being made aware, meaning that the IP address is designated as unavailable until the end of the DHCP lease, rather than straight away.

There is thus a need for an improved system for restricting network changes and ensuring that desired network policies are implemented.

### SUMMARY OF THE INVENTION

Embodiments of the present invention aim to at least partially overcome one or more needs in the prior art.

According to one aspect of the present invention, there is provided a network policy controller coupled to a computer network and comprising: a communications interface arranged to monitor network communications to track events relating to a plurality of network devices connected to said network; at least one memory (306) arranged to store past events relating to each of said plurality of network devices; and a processor arranged to verify, in response to an event relating to one of said network devices, the occurrence of at least one past event stored in said memory for said network device, and to perform an action based on said verification.

According to one embodiment, said action comprises, based on said verification, selectively restricting communications by said network device.

According to another embodiment, said action comprises selectively performing, based on said verification, one or more of: transmitting an electronic message indentifying said network device; controlling at least one network switch to restrict access by said network device; and assigning a new network address to said network device.

According to another embodiment, said at least one memory further stores a policy table defining rules associated with a plurality of types of events associated with said network devices, said rules defining said actions to be performed based on the occurrence of said one or more past events.

According to another embodiment, said at least one memory further stores an event recording table that stores said past events of said network devices, and a network status table storing a current status of each of said plurality of network devices, the entries of said network status table being a duplication of one or more entries of said event recording table.

According to another embodiment, said communications interface is arranged to monitor network communications at least relating to DHCP and DNS.

According to another embodiment, said communications interface is arranged to monitor network communications at least relating to ARP (Address Resolution Protocol), DHCP, DNS, RADIUS (Remote Authentication Dial-In User Service) and SNMP (Simple Network Management Protocol).

According to another embodiment, said communications interface is arranged to monitor network communications at least relating to one or more of SMTP (Simple Mail Transfer Protocol); POP (Post Office Protocol); IMAP (Internet Message Access Protocol); MAPI (Message Application Programming Interface); HTTP (Hypertext Transfer Protocol); HTTPS (HTTP secure); XMPP (Extensible Messaging and Presence Protocol); NTP (Network Time Protocol) and TFTP (Trivial File Transfer Protocol).

According to another embodiment, said action comprises controlling a switch to change the connection status of said network device.

According to another embodiment, said event relating to one of said network devices comprises a request to be assigned a network address.

According to another embodiment, said communications interface is arranged to monitor at least authorization and network address requests transmitted by said plurality of devices; and wherein said processor is arranged to verify in said memory, in response to a new network address request from one of said devices, the presence of a past authorization request for said device, and to respond to said new request based on said verification.

According to another embodiment, in response to said verification, said processor is arranged to respond to said request by selecting either a standard IP address or a quarantined IP address to be assigned to said network device.

According to a further aspect of the present invention, there is provided a method of implementing a network policy in a computer network comprising: monitoring, via a communications interface, network communications to track events relating to a plurality of network devices connected to said network; storing in at least one memory past events relating to each of said plurality of network devices; verifying, in response to an event relating to one of said network devices, the occurrence of at least one past event stored in said memory for said network device; and performing an action based on said verification.

According to one embodiment, said monitoring step comprises monitoring at least authorization and network address requests transmitted by said plurality of devices; and wherein said verification step comprises verifying in said memory, in response to a new network address request from one of said devices, the presence of a past authorization request for said device.

According to another embodiment, said action comprises selecting either a standard IP address or a quarantined IP address to be assigned to said network device.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
Figure 1 (described above) illustrates a computer network;
Figure 2 illustrates a computer network comprising a policy server according to an embodiment of the present invention;
Figure 3 illustrates the policy server of Figure 2 in more detail;
Figure 4 is a directed acyclic graph showing an example of a policy tree implemented by the policy server of Figure 2;
Figure 5 shows an example of an event recording table according to an embodiment of the present invention;
Figure 6 shows an example of a network status table according to an embodiment of the present invention;
Figure 7 shows an example of a policy table according to an embodiment of the present invention;
Figure 8 shows a further example of a few lines extracted from a policy table; and
Figure 9 is a flow diagram showing steps in a method of network policy management according to an embodiment of the present invention.

### DETAILED DESCRIPTION OF EN1BODIMENTS OF THE PRESENT INVENTION

Only features useful for an understanding of the invention have been illustrated in the drawings and will be described in detail. For example, the network protocols DHCP, RADIUS, ARP, SNMP and DNS are well known in the art, and will not be described herein in detail. Furthermore, it will be apparent to those skilled in the art that these protocols are merely examples, and that the present invention could be applied to any types of network protocol.

Furthermore, the above protocols correspond to the IPv4 internet protocol, while it will be apparent to those skilled in the art that the invention described herein could be equally applied to protocols of the IPv6 protocol.

Figure 2 illustrates a computer network 200 almost identical to the one of Figure 1 described above, and like features have been labelled with like reference numerals. However, network 200 additionally comprises a policy server 202.

The network 200 is for example an Ethernet LAN (local area network) or wireless LAN.

Policy server 202 for example provides network functions including assigning network IP addresses according to DHCP, and providing authentication according to RADIUS. It for example also implements functions of providing hardware addresses according to ARP, authorizing or blocking new devices connected to the switch 102, for example according to SNMP and mapping domain names to IP addresses, for example according to DNS. Additionally, the policy server implements a policy tree, which enforces certain network rules regarding the order that network functions are to be performed over the network.

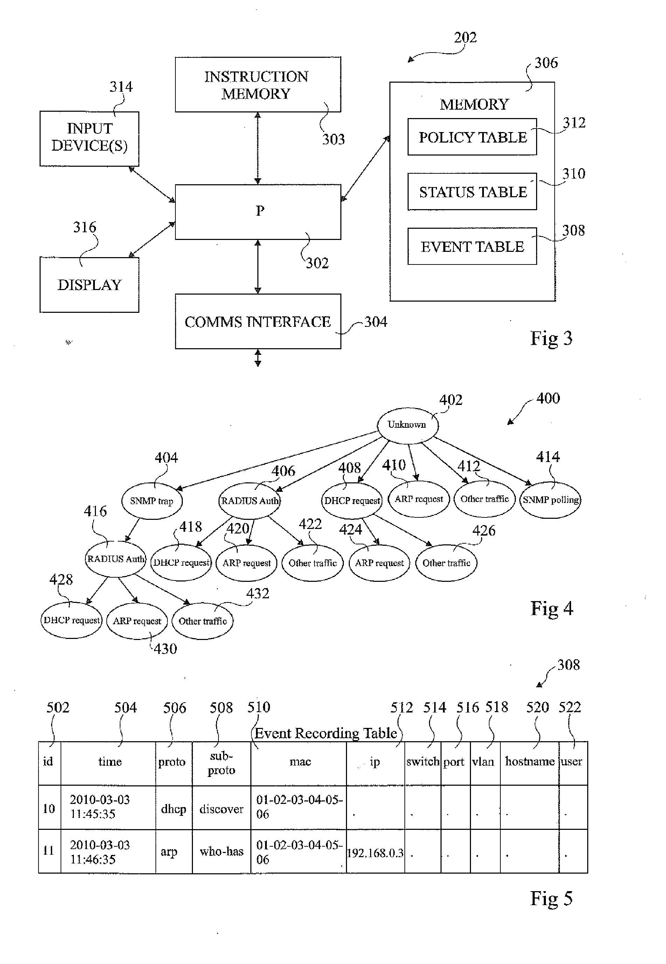

Figure 3 illustrates the policy server 202 in more detail according to one example. Policy server 202 comprises a processor 302 controlled by instructions from an instruction memory 303. Furthermore, processor 302 is coupled to a communications interface 304, which provides a connection, for example wirelessly or via an Ethernet cable, to the switch 102 of the network 200. Processor 302 also communicates with a memory 306, which stores an event table 308, a status table 310 and policy table 312.

The event table 308 stores a record of all network activity in the form of network events. While it may be periodically cleared, in general this table is append-only, meaning that it logs all historical events.

The status table 310 is used for keeping track of the current status of the network, and stores events for active devices currently connected to the network. For example, this means that if a network switch is turned-off, any devices coupled to the switch will no longer have access to the network, even though they remain physically connected to the switch. During power down, the switch will send a "powering off" notification. This notification will be logged in the event table, and then all events in the status table related to that switch and to devices connected via that switch will be deleted from the status table.

The policy table 312 defines the rules for implementing network policy. In particular, it maps events to certain actions as will be described in more detail below.

The policy server 202 also optionally comprises one or more input devices such as a keyboard and mouse allowing modifications to the policy tables, although access may alternatively be provided remotely via the network. Similarly, a display 316 may be optionally provided, or alternatively the display of a remote device on the network may be used to display elements of the tables 308 to 312 to an operator.

Figure 4 is a directed acyclic graph showing an example of a policy tree 400 implemented by the policy server 202 of Figure 3. Each of the nodes of the tree represents a given status of a device of the network, while the arrows between nodes indicate a change of status of the device, or the arrival of a communication providing additional information regarding the network status.

Initially, at a starting node 402, it is assumed that nothing is known regarding a given network device.

From node 402, any of a number events, in other words network status changes or communications providing new network information, may occur. In this example the possible events are:
- SNMP trap 404, indicating that a switch has detected the connection to it of a new device. The SNMP trap 404 for example comprises the MAC address of the new device, the switch IP address, and the switch port to which the new device is connected.
- RADIUS Auth 406, indicating that an authorization request has been received from a new device. Such a request for example comprises a user name and password, and will be accompanied by the MAC address of the new device, the switch IP address, and the switch port to which the new device is connected.
- DHCP request 408, indicating that a request for a network IP address has been received from a new device. The DCHP request 408 for example comprises the MAC address of the new device, the switch IP address, and the switch port to which the new device is connected.
- ARP request 410, indicating that an ARP request has been received from a new device, supplying its MAC and IP address, and an IP address of an existing network device for which it requests the corresponding MAC address.
- Other traffic 412, which could for example be a DNS request, associated with a new network device attempting to access the internet via the network. As a further example, the events could additionally be related to one or more of the following email/chat protocols: SMTP (Simple Mail Transfer Protocol), POP (Post Office Protocol), IMAP (Internet Message Access Protocol), MAPI (Message Application Programming Interface), HTTP (Hypertext Transfer Protocol), HTTPS (HTTP secure); XMPP (Extensible Messaging and Presence Protocol) NTP (Network Time Protocol and TFTP (Trivial File Transfer Protocol).
- SNMP polling 414, indicating that in response to a request made to a switch, the returned SNMP data indicates a new device on the network, identified by the switch port.

The subsequent nodes of the policy tree 402, below the nodes 404 to 414, indicate examples of possible subsequent events. In particular, after an SNMP trap 404, a RADIUS authorisation 416 may occur for the given device. After a RADIUS authorisation 406, a DHCP request 418, ARP request 430 or other traffic 422 may occur for the given device. After a DHCP request 408, an ARP request 424 or other traffic 426 may occur. Furthermore, after an ARP request 410, or after other traffic 412, or after SNMP polling 414, further events may occur not detailed in the diagram of Figure 4.

It should be noted that the policy tree of Figure 4 is a simplification of the possible state changes of devices on the network, as other states could be possible, and it would be possible to revert to a previous state, for example if a DHCP lease expires, or to perform a sideways transition.

Figure 5 shows an example of the event table 308. Events are recorded in rows. Columns 502 and 504 provide an identifier and a time for each event respectively. A protocol column 506 indicates the protocol according to which the event occurred, such as the DHCP protocol or ARP protocol. A sub-protocol column 508 indicates the particular event of the protocol, such a "who-has" ARP request for the MAC address corresponding to a certain IP address. Columns 510 and 512 indicate MAC and IP addresses of the network device triggering the event, while switch, port and vlan columns 514, 516 and 518 respectively indicate the switch, the port of the switch, and the virtual LAN to which the network device is connected. Finally, columns 520 and 522 indicate respectively the hostname and user of the network device. It will be apparent to those skilled in the art that most protocol comprise only a subset of the column in formation indicated in the table of Figure 5, and that additional or fewer columns could be provided.

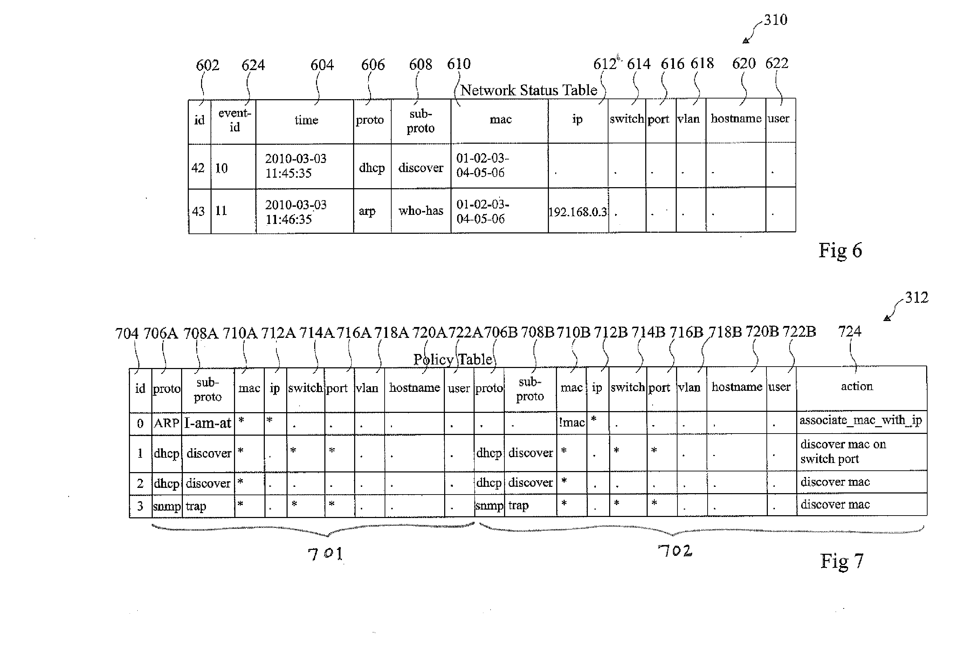

Figure 6 shows an example of the network status table 310, which has columns 602 to 622 the same as the columns 502 to 522 of event table 308 described above. Additionally, the network status table 310 comprises a column 624 indicating the event identification corresponding to each row. In the example of Figure 6, table 310 stores two rows of the events table 308 having identifiers 10 and 11 respectively, which in the status table have identifiers 42 and 43 respectively.

Thus the network status table 310 will duplicate data stored in the event table 308. However, it only comprises entries concerning the network devices currently active in the network. Thus, if a device leaves the network, the entries in the status table 310 having a MAC address in column 610 corresponding to this device will be deleted, but these rows will remain in the event table 308.

Figure 7 shows an example of the policy table 312, which contains a left-hand side 701 and a right-hand side 702.

The left-hand side 701 comprises an identifier column 704 identifying each row, and then columns 706A to 722A corresponding to columns 606 to 622 respectively of the network status table 310 of Figure 6.

The right-hand side 702 comprises columns 706B to 722B, also corresponding to columns 606 to 622 respectively of the network status table 310 of Figure 6, and an action column 724.

The fields of the left-hand side 701 of the policy table are searchable to identify a given event type. Then, the right-hand side 702 of the table indicates a status, and the action to be formed if the status corresponds to the true status indicated in the status table.

The presence of an asterisk in corresponding fields of the left-hand and right-hand sides 701, 702 of the policy table 312 indicate that these fields can contain any value, whereas a dot indicates that, for the given protocol, these fields are not likely to be present.

The entries of the policy table are for example ordered by priority, high priority items being listed near the top of the table, and low priority items towards the bottom of the table. This is because the policy table is searched from the top down, and once a match is found, the corresponding action is performed for example without proceeding further down the table. Low priority "catch all" policies are placed lower in the table, and are implemented only if no matching policy is defined higher in the table.

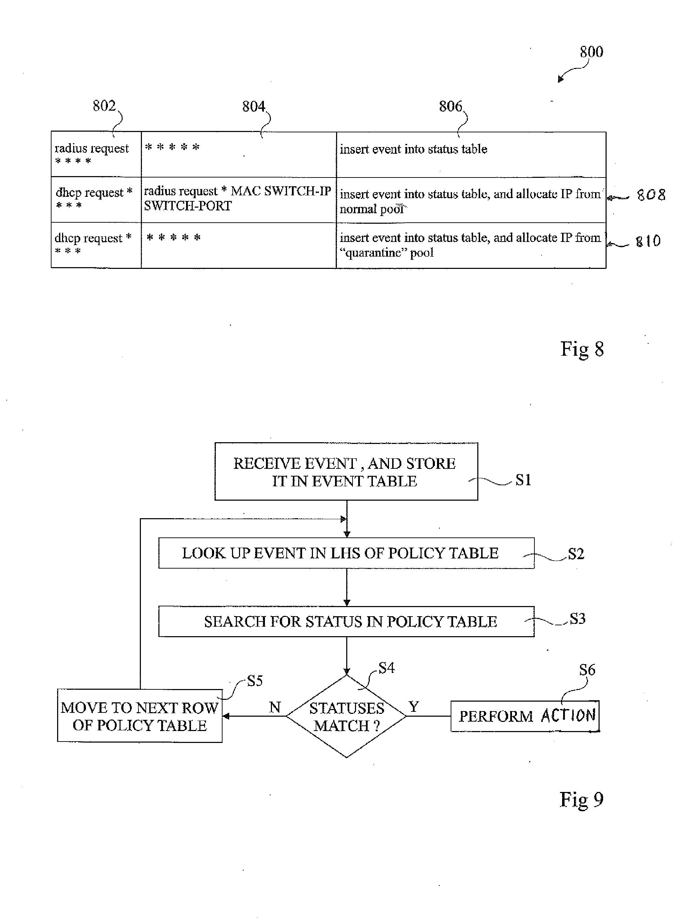

An example of the operation of the policy server 202 using the policy table 312 will now be described with reference to Figure 8, which shows an example of a few lines extracted from a policy table, and with reference to Figure 9, which is a flow diagram illustrating steps for applying the network policies.

Figure 8 illustrates an extract 800 of the policy table, indicating in a column 802 events that could be identified in the left-hand side 701 of the policy table, in a column 804 some statuses that could be identified in the right-hand side 702 of the policy table, and in a column 806 a number of corresponding actions.

Referring now to Figure 9, in a first step S1, a new event is received by the policy server, and stored in the event table. In particular, the data corresponding to the MAC address of the network device, IP address (if known) etc. are entered in the table. As an example, the event could be a DHCP request with MAC x, switch IP y, and Switch Port z.

In a next step S2, the event is searched for in the policy table starting at the top, and working down. In the case of the DHCP request, the first row for which the event corresponds will be the second row 808 of Figure 8.

In a next step S3, the status indicated in the right-hand side of the policy table is searched for in the network status table. In the example of Figure 8, the status is that there has been a RADIUS request for the same MAC x, switch IP y and Switch port z of the network device.

In a next step S4, it checked whether the statuses in the policy table and the status table match. If not, the next step is S5, whereas if so, the next step is S6.

For example, if no RADIUS request has yet been made by the network device, the next step is S5, in which the current row of the policy table is discarded, and we move to the next row and continue the search for the event by returning to step S2. The next row 810 of the policy table also relates to a DHCP request, but the field in column 804 indicates only asterisks, meaning that any status is permitted. Thus in S4, the statuses match, and the next step is S6.

In step S6, the action of the current row of the policy table is executed. In the example that the match is found in row 810 of the policy table of Figure 8, this implies allocating an IP address from a "quarantine" pool, such that the activities of the network device will be restricted.

Thus in the example of Figure 8, if a RADIUS authorisation request is made and authorized before a DHCP request, a standard IP address will be allocated to the requesting network device, whereas if no RADIUS request has been made, access to the network will be restricted.

The quarantine IP address for example allows the user of the requesting network device to access only a warning page asking them to contact IT personnel.

An advantage of the embodiments described herein is that, by providing a policy server that maintains a network status table, monitors network events, and acts based on the previous status of the network, network security is improved, and access to the network more efficiently controlled.

Advantageously, the action is to restrict communications from one or more network devices based on the verification.

Having thus described at least one illustrative embodiment of the invention, various alterations, modifications and improvements will readily occur to those skilled in the art.

For example, while embodiments have been described that comprises a single network switch, it will be apparent to those skilled in the art that the present invention may be applied to more complex networks comprising multiple switches.

Furthermore, it will be apparent to those skilled in the art that, while the protocols mentioned herein generally correspond to the internet protocol IPv4, embodiments of the invention could equally be applied to similar or different types of network protocols, such as those of IPv6.

Furthermore, while certain examples of the tables have been provided, it will be apparent to those skilled in the art that different tables could be used, and that in some embodiments it may not be needed to maintain an event table in addition to the policy table and network status table.

The variations features described in relation to the various embodiments could be combined in alternative embodiments in any combination.

## Claims

1. A network policy controller coupled to a computer network (200) and comprising:
a communications interface (303) arranged to monitor network communications to track events relating to a plurality of network devices connected to said network;
at least one memory (306) arranged to store past events relating to each of said plurality of network devices; and
a processor (302) arranged to verify, in response to an event relating to one of said network devices, the occurrence of at least one past event stored in said memory for said network device, and to perform an action based on said verification.

2. The network policy controller of claim 1, wherein said action comprises, based on said verification, selectively restricting communications by said network device.

3. The network policy controller of claim 1 or 2, wherein said action comprises selectively performing, based on said verification, one or more of:
transmitting an electronic message indentifying said network device;
controlling at least one network switch to restrict access by said network device; and
assigning a new network address to said network device.

4. The network policy controller of any of claims 1 to 3, wherein said at least one memory further stores a policy table (312) defining rules associated with a plurality of types of events associated with said network devices, said rules defining said actions to be performed based on the occurrence of said one or more past events.

5. The network policy controller of any of claims 1 to 4, wherein said at least one memory further stores an event recording table (308) that stores said past events of said network devices, and a network status table (310) storing a current status of each of said plurality of network devices, the entries of said network status table being a duplication of one or more entries of said event recording table.

6. The network policy controller of any of claims 1 to 5, wherein said communications interface (303) is arranged to monitor network communications at least relating to DHCP (Dynamic Host Configuration Protocol) and DNS (Domain Name System).

7. The network policy controller of any of claims 1 to 5, wherein said communications interface (303) is arranged to monitor network communications at least relating to ARP (Address Resolution Protocol), DHCP, DNS, RADIUS (Remote Authentication Dial-In User Service) and SNMP (Simple Network Management Protocol).

8. The network policy controller of claim 7, wherein said communications interface (303) is arranged to monitor network communications at least relating to one or more of SMTP (Simple Mail Transfer Protocol); POP (Post Office Protocol); IMAP (Internet Message Access Protocol); MAPI (Message Application Programming Interface); HTTP (Hypertext Transfer Protocol); HTTPS (HTTP secure); XMPP (Extensible Messaging and Presence Protocol); NTP (Network Time Protocol) and TFTP (Trivial File Transfer Protocol).

9. The network policy controller of any of claims 1 to 8, wherein said action comprises controlling a switch to change the connection status of said network device.

10. The network policy controller of any of claims 1 to 9, wherein said event relating to one of said network devices comprises a request to be assigned a network address.

11. The network policy controller of claim 10, wherein said communications interface is arranged to monitor at least authorization and network address requests transmitted by said plurality of devices (104, 106, 108); and wherein said processor (302) is arranged to verify in said memory, in response to a new network address request from one of said devices, the presence of a past authorization request for said device, and to respond to said new request based on said verification.

12. The network policy controller of claim 11, wherein in response to said verification, said processor is arranged to respond to said request by selecting either a standard IP address or a quarantined IP address to be assigned to said network device.

13. A method of implementing a network policy in a computer network comprising:
monitoring, via a communications interface (303), network communications to track events relating to a plurality of network devices connected to said network;
storing in at least one memory (306) past events relating to each of said plurality of network devices;
verifying, in response to an event relating to one of said network devices, the occurrence of at least one past event stored in said memory for said network device; and
performing an action based on said verification.

14. The method of claim 13, wherein said monitoring step comprises monitoring at least authorization and network address requests transmitted by said plurality of devices (104, 106, 108); and wherein said verification step comprises verifying in said memory, in response to a new network address request from one of said devices, the presence of a past authorization request for said device.

15. The method of claim 13 or 14, wherein said action comprises selecting either a standard IP address or a quarantined IP address to be assigned to said network device.
